(19) Europäisches Patentamt
European Patent Office
Office européen des brevets

(11) **EP 4 391 341 B1**

(12) **EUROPEAN PATENT SPECIFICATION**

(45) Date of publication and mention
of the grant of the patent:
**25.03.2026 Bulletin 2026/13**

(21) Application number: **23826161.4**

(22) Date of filing: **07.06.2023**

(51) International Patent Classification (IPC):
**H02M 3/158** (2006.01)    **H02M 3/07** (2006.01)

(52) Cooperative Patent Classification (CPC):
**H02M 3/158; H02M 1/0032; H02M 1/0095; H02M 3/07;** H02M 1/0043; H02M 7/4833; H02M 7/4837

(86) International application number:
**PCT/CN2023/098923**

(87) International publication number:
**WO 2023/246512 (28.12.2023 Gazette 2023/52)**

(54) **MULTI-LEVEL DIRECT CURRENT CONVERTER, VOLTAGE CONTROL METHOD FOR FLYING CAPACITOR, AND CONTROL APPARATUS**

MEHRSTUFIGER GLEICHSTROMWANDLER, SPANNUNGSSTEUERUNGSVERFAHREN FÜR EINEN FLIEGENDEN KONDENSATOR UND STEUERUNGSVORRICHTUNG

CONVERTISSEUR DE COURANT CONTINU MULTINIVEAU, PROCÉDÉ DE COMMANDE DE TENSION POUR CONDENSATEUR VOLANT, ET APPAREIL DE COMMANDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.06.2022 CN 202210715575**

(43) Date of publication of application:
**26.06.2024 Bulletin 2024/26**

(73) Proprietor: **Huawei Digital Power Technologies Co., Ltd.**
**Shenzhen, Guangdong 518043 (CN)**

(72) Inventors:
• **WU, Rong**
  **Shenzhen, Guangdong 518043 (CN)**
• **ZHONG, Shaohui**
  **Shenzhen, Guangdong 518043 (CN)**
• **WU, Zhiqing**
  **Shenzhen, Guangdong 518043 (CN)**
• **ZHAO, Jing**
  **Shenzhen, Guangdong 518043 (CN)**
• **FAN, Juntao**
  **Shenzhen, Guangdong 518043 (CN)**

(74) Representative: **Gill Jennings & Every LLP**
**The Broadgate Tower**
**20 Primrose Street**
**London EC2A 2ES (GB)**

(56) References cited:
CN-A- 107 306 083    CN-A- 112 994 450
CN-A- 112 994 494    CN-A- 115 149 807
US-A1- 2014 232 364

• SILVA CARVALHO SAMUEL DA ET AL: "Phase-Shift Control of Flying Capacitor Voltages in Multilevel Converters", 2020 IEEE APPLIED POWER ELECTRONICS CONFERENCE AND EXPOSITION (APEC), IEEE, 15 March 2020 (2020-03-15), pages 299 - 304, XP033784897, DOI: 10.1109/APEC39645.2020.9124402
• STILLWELL ANDREW ET AL: "Active Voltage Balancing in Flying Capacitor Multi-Level Converters With Valley Current Detection and Constant Effective Duty Cycle Control", IEEE TRANSACTIONS ON POWER ELECTRONICS, INSTITUTE OF ELECTRICAL AND ELECTRONICS ENGINEERS, USA, vol. 34, no. 11, 1 November 2019 (2019-11-01), pages 11429 - 11441, XP011744156, ISSN: 0885-8993, [retrieved on 20190904], DOI: 10.1109/TPEL.2019.2899899

- **VUKADINOVIC NENAD ET AL: "Extended wide-load range model for multi-level Dc-Dc converters and a practical dual-mode digital controller", 2016 IEEE APPLIED POWER ELECTRONICS CONFERENCE AND EXPOSITION (APEC), IEEE, 20 March 2016 (2016-03-20), pages 1597 - 1602, XP032898992, ISBN: 978-1-4673-8393-6, [retrieved on 20160510], DOI: 10.1109/APEC.2016.7468080**

**Description**

**TECHNICAL FIELD**

This application relates to the field of power electronics technologies, and in particular, to a multi-level direct current converter, a voltage control method for a flying capacitor, and a control apparatus.

**BACKGROUND**

A multi-level direct current converter can reduce a voltage stress of an input voltage on each switching transistor by adding a flying capacitor. A three-level direct current converter with the flying capacitor is used as an example, and a half of an input voltage may be stored by using a flying voltage, so that an output level has three states: 0, 1/2, and 1, and a change amplitude of the output levels is half of a two-level topology. In this way, a switching transistor with a low withstand voltage may be used to improve performance of an electronic system.

Currently, charge/discharge time of the flying capacitor may be adjusted by determining a current direction of an inductor and adjusting a difference between duty cycles of first switching transistors (or second switching transistors) in a switching transistor group, to control a voltage of the flying capacitor. However, when an inductor current is small, and the inductor current is a high-frequency triangular wave, and is repeatedly switched between positive and negative, controlling the voltage of the flying capacitor based on an instantaneous current direction has an extremely high requirement on a control chip, and is not applicable to an actual project. Even if the difference between the duty cycles of the first switching transistors (or the second switching transistors) in the switching transistor group is adjusted to a large value, the flying voltage cannot be effectively increased or decreased, and a control objective of stabilizing the voltage of the flying capacitor at a target value cannot be achieved. "Phase-Shift Control of Flying Capacitor Voltages in Multilevel Converters", Carvalho et al., DOI: 10.1109/APEC39645.2020.9124402, discloses new phase shift based control method for the flying capacitor voltages of multilevel converters. The new method is immune to load current variation and other stability issues that would arise when controlling the flying capacitor voltages with existing solutions. "Active Voltage Balancing in Flying Capacitor Multi-Level Converters With Valley Current Detection and Constant Effective Duty Cycle Control", Stillwell et al., DOI: 10.1109/TPEL.2019.2899899 discloses constant effective duty cycle (CEDC) compensation, which provides active balancing for the full load range of the converter. The proposed method is validated with a 4-level FCML experimental prototype, demonstrating excellent flying capacitor balancing over all load ranges, across the full duty cycles range and with multiple induced flying capacitor imbalances.

**SUMMARY**

Embodiments of this application disclose a multi-level direct current converter, a voltage control method for a flying capacitor, and a control apparatus, to control a voltage of the flying capacitor. This improves operation stability of the multi-level direct current converter. The invention is defined in the appended claims.

According to a first aspect, an embodiment of this application discloses a multi-level direct current converter. The multi-level direct current converter includes at least one flying capacitor, two switching transistor groups connected to the flying capacitor, an inductor connected to each switching transistor group and a positive electrode end of a low-voltage power supply of the multi-level direct current converter, and a controller configured to control the switching transistor groups, where each switching transistor group includes a first switching transistor and a second switching transistor whose on and off states are complementary, the first switching transistor is connected to one end of a high-voltage power supply of the multi-level direct current converter, and the second switching transistor is connected to the other end of the high-voltage power supply of the multi-level direct current converter; and the controller is configured to: when an absolute value of a difference between a sampling voltage and a reference voltage of the flying capacitor is greater than a first threshold, adjust a duty cycle difference between first switching transistors in the two switching transistor groups or a phase difference between carriers of first switching transistors in the two switching transistor groups based on a magnitude of an inductor current.

The multi-level direct current converter, is configured to perform direct current (direct current, DC)-direct current electric energy conversion, for example, may perform boost conversion, or may perform buck conversion. A specific type of the multi-level direct current converter is not limited in this application, and may be a three-level direct current converter, a five-level direct current converter, a seven-level direct current converter, or the like. A multi-level topology corresponding to the multi-level direct current converter means that an output level has at least three states. For example, the output level has three states: 1, 1/2, and 0, which is referred to as the three-level topology. The output level has five states: 1, 3/4, 1/2, 1/4, and 0, which is referred to as the five-level topology.

The first switching transistor and the second switching transistor may be field effect transistors (field effect transistor, FET), metal oxide semiconductor field effect transistors (metal oxide semiconductor field effect transistor,

3

MOSFET), insulated gate bipolar transistors (insulated gate bipolar transistors, IGBT), junction field effect transistors (junction field effect transistor, JFET), parallel diodes thereof, and the like. This is not limited herein.

The controller may be a pulse width modulation (pulse width modulation, PWM) device, a PWM-based battery management system (battery management system, BMS), a micro control unit (micro control unit, MCU), a central processing unit (central processing unit, CPU), another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, or the like. The controller may be one chip or a plurality of chips that have a communication connection. The controller may include a control unit corresponding to each switching transistor, or may include a control unit corresponding to a switching transistor group, for example, a pulse width modulator corresponding to a first switching transistor and a second switching transistor in the switching transistor group. This is not limited herein.

The sampling voltage of the flying capacitor is a collected real-time voltage. The reference voltage of the flying capacitor is a target value to be adjusted for the flying capacitor. A current of an inductor is also referred to as the inductor current, and may be an instantaneous current value or an average value.

The first threshold is not limited in this application. The first threshold may be 0, or the like. It may be understood that, if the absolute value of the difference between the sampling voltage and the reference voltage of the flying capacitor is greater than the first threshold, it indicates that a voltage of the flying capacitor is not adjusted to a target value (for example, the target value of the three-level direct current converter may be 1/2 times a voltage of the high-voltage power supply). A duty cycle difference between switching transistors on a side of the flying capacitor or a phase difference between carriers of first switching transistors on the side may continue to be adjusted, to control the voltage of the flying capacitor and reduce a voltage stress of the multi-level direct current converter. If the difference between the sampling voltage and the reference voltage of the flying capacitor is less than or equal to the first threshold, it indicates that the voltage of the flying capacitor has been adjusted to the target value, and a current operating state may be maintained and the flying capacitor continues to operate. In this way, operation stability of the multi-level direct current converter can be improved.

With reference to the first aspect, in a first possible implementation, the controller is specifically configured to increase the phase difference between the carriers of the first switching transistors in the two switching transistor groups when the controller determines to adjust the phase difference between the carriers of the first switching transistors in the two switching transistor groups based on the magnitude of the inductor current, and the sampling voltage of the flying capacitor is less than the reference voltage of the flying capacitor. In this way, the voltage of the flying capacitor can be increased.

With reference to the first aspect, in a second possible implementation, the controller is specifically configured to decrease the phase difference between the carriers of the first switching transistors in the two switching transistor groups when the controller determines to adjust the phase difference between the carriers of the first switching transistors in the two switching transistor groups based on the magnitude of the inductor current, and the sampling voltage of the flying capacitor is greater than the reference voltage of the flying capacitor. In this way, the voltage of the flying capacitor can be reduced.

With reference to the first aspect, or the first possible implementation, or the second possible implementation, in a third possible implementation, the controller is specifically configured to adjust the phase difference between the carriers of the first switching transistors in the two switching transistor groups when the inductor current is less than a second threshold.

With reference to the first aspect, in a fourth possible implementation, the controller is specifically configured to adjust the duty cycle difference between the first switching transistors in the two switching transistor groups when the inductor current is greater than a third threshold.

With reference to the first aspect, or the first possible implementation, or the second possible implementation, in a fifth possible implementation, the controller is specifically configured to: when the inductor current is greater than or equal to a second threshold and less than or equal to a third threshold, adjust, according to an adjustment method at a previous moment, the duty cycle difference between the first switching transistors in the two switching transistor groups or the phase difference between the carriers of the first switching transistors in the two switching transistor groups.

Values of the second threshold and the third threshold are not limited in this application, and the second threshold is less than the third threshold. It may be understood that, if the current of the inductor is less than the second threshold, it indicates that the current of the inductor is small, and the current may be a case of light load. On the premise that the duty cycle difference is not adjusted, the phase difference between the carriers of the first switching transistors in the two switching transistor groups may be adjusted by using a phase shift control method. If the current of the inductor is greater than the third threshold, it indicates that the current of the inductor is large, and the current may be a heavy load case. On the premise that the phase difference is not adjusted, the duty cycle difference between the first switching transistors in the two switching transistor groups may be adjusted by using a duty cycle adjustment method. If the current of the inductor is greater than or equal to the second threshold and less than or equal to the third threshold, the inductor may be in an intermediate state of light load and heavy load, and the adjustment may be performed in an adjustment manner at a previous moment. For example, if the phase shift control method is used at the previous moment, the phase shift control method is still used; or if the duty cycle adjustment method is used at the previous moment, the duty cycle adjustment method is still used. In this way, a flying voltage may be controlled by using the foregoing three cases, so that the voltage of the controlled flying capacitor keeps smooth transition.

According to a second aspect, an embodiment of this application discloses a voltage control method for a flying capacitor. The flying capacitor is used in a multi-level direct current converter, the multi-level direct current converter further includes two switching transistor groups, an inductor, and a controller, and each switching transistor group includes a first switching transistor and a second switching transistor whose on and off states are complementary; and the voltage control method includes: when an absolute value of a difference between a sampling voltage and a reference voltage of the flying capacitor is greater than a first threshold, adjusting, based on a magnitude of the inductor current, a duty cycle difference between first switching transistors in the two switching transistor groups or a phase difference between carriers of first switching transistors in the two switching transistor groups. In this way, when it is determined that the voltage of the flying capacitor is not adjusted to the target value, a duty cycle difference between switching transistors on a side of the flying capacitor or a phase difference between carriers of switching transistors on the side of the flying capacitor may continue to be adjusted, to control the voltage of the flying capacitor. This improves operation stability of the multi-level direct current converter.

With reference to the second aspect, in a first possible implementation, the adjusting, based on a magnitude of the inductor current, a duty cycle difference between first switching transistors in the two switching transistor groups or a phase difference between carriers of first switching transistors in the two switching transistor groups includes: increasing the phase difference between the carriers of the first switching transistors in the two switching transistor groups when the phase difference between the carriers of the first switching transistors in the two switching transistor groups is determined to be adjusted based on the magnitude of the inductor current, and the sampling voltage of the flying capacitor is less than the reference voltage of the flying capacitor.

With reference to the second aspect, in a second possible implementation, the adjusting, based on a magnitude of the inductor current, a duty cycle difference between first switching transistors in the two switching transistor groups or a phase difference between carriers of first switching transistors in the two switching transistor groups includes: decreasing the phase difference between the carriers of the first switching transistors in the two switching transistor groups when the phase difference between the carriers of the first switching transistors in the two switching transistor groups is determined to be adjusted based on the magnitude of the inductor current, and the sampling voltage of the flying capacitor is greater than the reference voltage of the flying capacitor.

With reference to the second aspect, in a third possible implementation, the adjusting, based on a magnitude of the inductor current, a duty cycle difference between first switching transistors in the two switching transistor groups or a phase difference between carriers of first switching transistors in the two switching transistor groups includes: adjusting, by the controller, the phase difference between the carriers of the first switching transistors in the two switching transistor groups when the inductor current is less than a second threshold.

With reference to the second aspect, in a fourth possible implementation, the adjusting, by the controller based on a magnitude of the current, a duty cycle difference between first switching transistors in the two switching transistor groups or a phase difference between carriers of first switching transistors in the two switching transistor groups includes: in response to that the current is greater than a third threshold, adjusting, by the controller, the duty cycle difference between the first switching transistors in the two switching transistor groups.

With reference to the second aspect, in a fifth possible implementation, the adjusting, by the controller based on a magnitude of the current, a duty cycle difference between first switching transistors in the two switching transistor groups or a phase difference between carriers of first switching transistors in the two switching transistor groups includes: in response to that the current is greater than or equal to the second threshold and less than or equal to the third threshold, adjusting, by the controller according to an adjustment method at a previous moment, the duty cycle difference between the first switching transistors in the two switching transistor groups or the phase difference between the carriers of the first switching transistors in the two switching transistor groups.

According to a third aspect, an embodiment of this application discloses a control apparatus. The control apparatus includes a controller and a memory. The memory is configured to store instructions, and the controller is configured to invoke the instructions stored in the memory, to perform the method in the second aspect.

It should be understood that, for implementations and beneficial effects of the foregoing aspects of this application, reference may be made to each other.

**BRIEF DESCRIPTION OF DRAWINGS**

The following describes the accompanying drawings used in embodiments of this application.

FIG. 1 is a schematic diagram of an architecture of a photovoltaic power generation system according to an embodiment of this application;

FIG. 2 is a circuit diagram of a three-level direct current converter according to an embodiment of this application;

FIG. 3 is a schematic diagram of a structure of a multi-level direct current converter according to an embodiment of this application;

FIG. 4 to FIG. 9 are operating mode diagrams of a three-level direct current converter according to this application;

FIG. 10 to FIG. 13 are diagrams of a relationship between a duty cycle difference and a flying voltage and a relationship between a phase difference and a flying voltage according to this application;

FIG. 14 is a schematic flowchart of adjusting a voltage of a flying capacitor by a controller according to an embodiment of this application; and

FIG. 15 is a schematic flowchart of a voltage control method for a flying capacitor according to an embodiment of this application.

## DESCRIPTION OF EMBODIMENTS

A "connection" described in this application is a direct or indirect connection. For example, that A is connected to B may be that A is directly connected to B, or may be that A is indirectly connected to B through one or more other electrical components. For example, A may be directly connected to C, and C may be directly connected to B, so that A and B are connected by using C. The connection may alternatively be referred to as a coupling, an electrical connection, or the like. This is not limited herein. Terms "first" and "second" are merely used for a purpose of description, and shall not be understood as an indication or implication of relative importance.

Embodiments of this application relate to a multi-level direct current converter, and is configured to perform direct current (direct current, DC)-direct current electric energy conversion, for example, may perform boost conversion, or may perform buck conversion. This is not specifically limited in embodiments of this application. In addition, an application scenario of the multi-level direct current converter is not limited in embodiments of this application. The multi-level direct current converter may be used in different types of electric devices (such as a power grid, a home device, or an industrial and commercial electric device), may be used in different application scenarios such as an electric device field such as a user terminal (such as a mobile phone, an intelligent device, or a television set) field and a vehicle field, and may be used in a power supply scenario of a large electric device (such as a power grid and an industrial device) and a power supply scenario of a small and medium-sized distributed electric device (such as a vehicle-mounted electric device and a home electric device), and a power supply scenario of a mobile electric device (such as a mobile phone and an intelligent device), and the like.

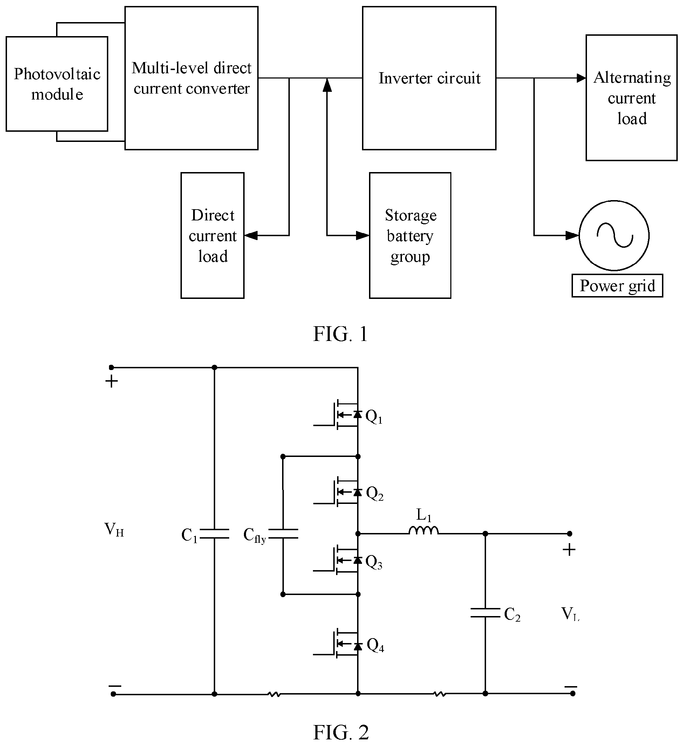

For example, FIG. 1 is a schematic diagram of an architecture of a photovoltaic power generation system according to an embodiment of this application. As shown in FIG. 1, the photovoltaic power generation system includes a photovoltaic module, a multi-level direct current converter, a storage battery group, an inverter circuit, direct current load, alternating current load, and a power grid. In the photovoltaic power generation system, solar energy is converted into direct current energy by the photovoltaic module. The direct current energy is boosted by using the multi-level direct current converter. The boosted direct current energy may be supplied to the direct current load, or may be stored in the storage battery group, or may be converted into alternating current energy by using an inverter, so that the alternating current energy can be supplied to the alternating current load or connected to the power grid.

A specific type of the multi-level direct current converter is not limited in this application, and may be a three-level direct current converter, a five-level direct current converter, a seven-level direct current converter, or the like. A multi-level topology corresponding to the multi-level direct current converter means that an output level has at least three states. For example, the output level has three states: 1, 1/2, and 0, which is referred to as a three-level topology. The output level has five states: 1, 3/4, 1/2, 1/4, and 0, which is referred to as a five-level topology. In addition, multi-level topology circuits are further classified into a diode-clamped multi-level topology circuit, a flying capacitor-clamped multi-level topology circuit, and other forms. The topology circuit of the multi-level direct current converter in this application may be the flying capacitor-clamped multi-level topology circuit, which includes a flying capacitor.

To make a person skilled in the art better understand the technical solutions provided in embodiments of this application, the following uses a three-level direct current converter as an example. FIG. 2 is a circuit diagram of a three-level direct current converter according to an embodiment of this application. As shown in FIG. 2, the three-level direct current converter includes a high-voltage power supply $V_H$, a capacitor $C_1$, a switching transistor $Q_1$, a switching transistor $Q_2$, a switching transistor $Q_3$, a switching transistor $Q_4$, a flying capacitor $C_{fly}$, an inductor $L_1$, a capacitor $C_2$, and a low-voltage power supply $V_L$.

The switching transistor $Q_1$, the switching transistor $Q_2$, the switching transistor $Q_3$, and the switching transistor $Q_4$ may be field effect transistors (field effect transistors, FET), metal-oxide-semiconductor field effect transistors (metal-oxide-semiconductor field effect transistors, MOSFET), insulated gate bipolar transistors (insulated gate bipolar transistors, IGBT), junction field effect transistors (junction field effect transistors, JFET), diodes connected in parallel to the junction field effect transistors, and the like. This is not limited herein.

A drain electrode of the switching transistor $Q_1$ is connected to a positive end of the high-voltage power supply $V_H$ (a parallel capacitor $C_1$), and a source electrode of the switching transistor $Q_1$ is connected to a drain electrode of the switching transistor $Q_2$ and one end of the flying capacitor $C_{fly}$. The other end of the flying capacitor $C_{fly}$ is connected to a source electrode of the switching transistor $Q_3$ and a drain electrode of the switching transistor $Q_4$. A source electrode of the switching transistor $Q_2$ and a drain electrode of the switching transistor $Q_3$ are connected to one end of the inductor $L_1$, and the other end of the inductor $L_1$ is connected to a negative end of the low-voltage power supply $V_L$ (a parallel capacitor $C_2$).

In this embodiment of this application, the switching transistors may be grouped based on a connection relationship between the flying capacitor $C_{fly}$ and the switching transistors, to obtain two switching transistor groups connected to the flying capacitor $C_{fly}$. For example, the switching transistor $Q_1$ and the switching transistor $Q_4$ are a switching transistor group, and the switching transistor $Q_2$ and the switching transistor $Q_3$ are a switching transistor group. Further, according to a connection relationship between the switching transistors and the high-voltage power supply $V_H$ of the multi-level direct current converter, switching transistors that are in the switching transistor groups and that are connected to one end of the high-voltage power supply $V_H$ are referred to as first switching transistors, and switching transistors that are in the switching transistor groups and that are connected to the other end of the high-voltage power supply $V_H$ are referred to as second switching transistors. For example, if the first switching transistors are connected to the positive end of the high-voltage power supply $V_H$, the first switching transistors may be the switching transistor $Q_1$ and the switching transistor $Q_2$. If the second switching transistors are connected to a negative end of the high-voltage power supply $V_H$, the second switching transistors may be the switching transistor $Q_4$ and the switching transistor $Q_3$.

A first switching transistor and a second switching transistor in a switching transistor group whose on and off states are complementary. For example, the switching transistor $Q_1$ and the switching transistor $Q_4$ whose on and off states are complementary. In this case, when the switching transistor $Q_1$ is in the on state, the switching transistor $Q_4$ is in the off state. The switching transistor $Q_1$ is in the off state, and the switching transistor $Q_4$ is in the on state. In this way, a current signal may be transferred by using a carrier of a switching transistor that is turned on in the first switching transistor and the second switching transistor in the switching transistor group.

Because the first switching transistor and the second switching transistor in the same switching transistor group whose on and off states are complementary, if the first switching transistor in the switching transistor group is turned off, the second switching transistor in the switching transistor group needs to be controlled to be turned on. If the first switching transistor in the switching transistor group is closed, the second switching transistor in the switching transistor group needs to be controlled to be turned off. The following describes a method for controlling a first switching transistor in a switching transistor group. For a method for controlling a second switching transistor in the switching transistor group, refer to the description of the method for controlling the first switching transistor for corresponding adjustment.

In this application, one flying capacitor is used as an example for description. Actually, there may be two or more flying capacitors, for example, another flying capacitor that is not shown in FIG. 2 and that is connected in series to a flying capacitor $C_{fly}$. Alternatively, two flying capacitors may be stored in a five-level direct current converter, and one flying capacitor is connected in parallel to a first switching transistor group and a second switching transistor group. In the five-level direct current converter, the second switching transistor group includes a first sub-switch group and a second sub-switch group, and the first sub-switch group and the second sub-switch group are connected in parallel to the other flying capacitor. This application does not limit a magnitude and quantity of an inductor, and the multi-level direct-current converter may further include a capacitor, a resistor, and the like connected to the inductor.

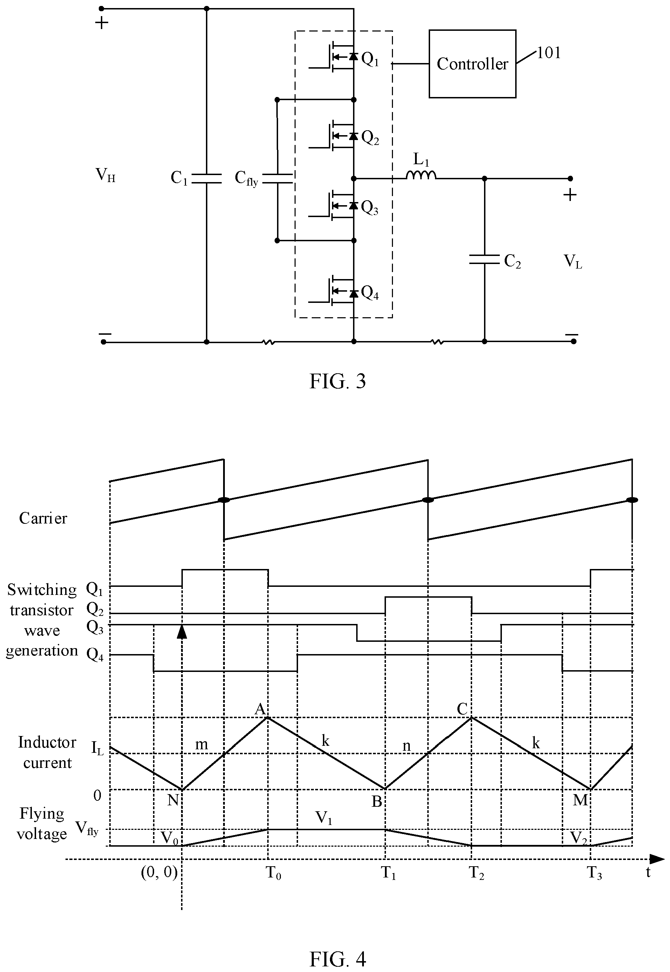

The three-level direct current converter may further include a controller 101 configured to control the switching transistor group in FIG. 3. The controller 101 may be a pulse width modulation (pulse width modulation, PWM) device, a PWM technology-based battery management system (battery management system, BMS), a micro control unit (micro control unit, MCU), a central processing unit (central processing unit, CPU), another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, or the like. The controller may be understood as one chip or a plurality of chips that have a communication connection. The controller may include a control unit corresponding to each switching transistor, or may include a control unit corresponding to a switching transistor group, for example, a pulse width modulator corresponding to the switching transistor $Q_1$ and the switching transistor $Q_4$, or a pulse width modulator corresponding to the switching transistor $Q_2$ and the switching transistor $Q_3$. This is not limited herein.

Carriers of the switching transistor $Q_1$, the switching transistor $Q_2$, the switching transistor $Q_3$, and the switching transistor $Q_4$ may be modulated by using the PWM technology, and an on state and an off state of the switching transistors are controlled, to implement real-time bidirectional power flow. When load is connected to the low-voltage power supply $V_L$ of the three-level direct current converter, an input end of the three-level direct current converter is the high-voltage power supply $V_H$, an output end of the three-level direct current converter is the low-voltage power supply $V_L$, and a current of the three-level direct current converter flows from the high-voltage power supply $V_H$ to the low-voltage power supply $V_L$. When the load is connected to the high-voltage power supply $V_H$ of the three-level direct current converter, an input end of the three-level direct current converter is the low-voltage power supply $V_L$, an output end of the three-level direct current converter is the high-voltage power supply $V_H$, and a current of the three-level direct current converter flows from the low-voltage power supply $V_L$ to the high-voltage power supply $V_H$.

In addition, charging and discharging time of the flying capacitor may be adjusted by determining a current direction of the inductor $L_1$, to control a voltage of the flying capacitor. For example, when the switching transistor $Q_1$ and the switching transistor $Q_3$ are turned on, the high-voltage power supply $V_H$ acts on the low-voltage power supply $V_L$ by using the switching transistor $Q_1$, the switching transistor $Q_3$, and the inductor $L_1$. If a current of the inductor $L_1$ flows from the high-voltage power supply $V_H$ to the low-voltage power supply $V_L$ (the current direction is positive), the flying capacitor $C_{fly}$ is charged, and the voltage increases. If a current of the inductor $L_1$ flows from the low-voltage power supply $V_L$ to a high-voltage power supply $V_H$ (the current direction is negative), the flying capacitor $C_{fly}$ is discharged, and the voltage decreases. When the switching transistor $Q_2$ and the switching transistor $Q_4$ are turned on, the flying capacitor $C_{fly}$ acts on the low-voltage power supply $V_L$ by using the switching transistor $Q_2$, the switching transistor $Q_4$, and the inductor $L_1$. If the current direction of the inductor $L_1$ is positive, the flying capacitor $C_{fly}$ is discharged, and the voltage decreases. If the current direction of the inductor $L_1$ is negative, the flying capacitor $C_{fly}$ is charged, and the voltage increases.

In this embodiment of this application, the voltage of the flying capacitor $C_{fly}$ may be referred to as a flying voltage for short, and a current of the inductor may be referred to as an inductor current for short. If the inductor current is small, and the inductor current is a high-frequency triangular wave and repeatedly switched between positive and negative, this case may be referred to as light load. On the contrary, if the inductor current is large, and the inductor current is always positive or negative, this case may be referred to as heavy load. A difference between duty cycles may be referred to as a duty cycle difference for short, and a phase shift or a difference between phases may be referred to as a phase difference for short. A phase shift control method is to adjust the phase on the premise of a fixed duty cycle. A duty cycle adjustment method is to adjust the duty cycle on the premise of a fixed phase. In this way, a unity of adjustment can be improved, and an affected voltage can be smoothly changed.

When the three-level direct current converter operates in a steady state, duty cycles of the switching transistor $Q_1$ (the switching transistor $Q_3$) and the switching transistor $Q_2$ (the switching transistor $Q_4$) are equal, and a phase shift is 180°. In other words, a phase difference between carriers of the switching transistor $Q_1$ and the switching transistor $Q_2$ is 180°. Therefore, steady-state operation of the three-level direct current converter may be implemented by adjusting a difference (which may be referred to as a duty cycle difference for short) between duty cycles of the switching transistor $Q_1$ and the switching transistor $Q_2$. For example, when power flows from the high-voltage power supply $V_H$ to the low-voltage power supply $V_L$ (a current flows from the high-voltage power supply $V_H$ to the low-voltage power supply $V_L$), the flying voltage may be increased by increasing a duty cycle of the switching transistor $Q_1$ and decreasing a duty cycle of the switching transistor $Q_2$, that is, by increasing a duty cycle difference between the switching transistor $Q_1$ and the switching transistor $Q_2$, and on the contrary, the flying voltage may be decreased by decreasing a duty cycle of the switching transistor $Q_1$ and increasing a duty cycle of the switching transistor $Q_2$, that is, by decreasing a duty cycle difference between the switching transistor Q1 and the switching transistor $Q_2$. When power flows from the low-voltage power supply $V_L$ to the high-voltage power supply $V_H$ (a current flows from the low-voltage power supply $V_L$ to the high-voltage power supply $V_H$), the flying voltage may be increased by decreasing a duty cycle of the switching transistor $Q_1$ and increasing a duty cycle of the switching transistor $Q_2$, that is, by decreasing a duty cycle difference between the switching transistor $Q_1$ and the switching transistor $Q_2$, and on the contrary, the flying voltage may be decreased by increasing a duty cycle of the switching transistor $Q_1$ and decreasing a duty cycle of the switching transistor $Q_2$, that is, by increasing a duty cycle difference between the switching transistor $Q_1$ and the switching transistor $Q_2$.

However, in a case of light load, controlling the voltage of the flying capacitor based on an instantaneous current direction has an extremely high requirement on a control chip, and is not applicable to an actual project. Even if a difference between duty cycles of first switching transistors (for example, the switching transistor $Q_1$ and the switching transistor $Q_2$) or second switching transistors (for example, the switching transistor $Q_3$ and the switching transistor $Q_4$) in the switching transistor groups connected in parallel to the flying capacitor is adjusted to a large value, the voltage of the flying capacitor cannot be effectively increased or decreased, and a control objective of stabilizing the voltage of the flying capacitor at a target value cannot be achieved.

Based on this, this application proposes a multi-level direct current converter. A controller in the multi-level direct current converter is configured to: when an absolute value of a difference between a sampling voltage and a reference voltage of a flying capacitor is greater than a first threshold, adjust, based on a magnitude of the inductor current, a duty cycle difference between first switching transistors in the two switching transistor groups or a phase difference between carriers of first switching transistors in the two switching transistor groups.

The sampling voltage of the flying capacitor is a collected real-time voltage. The reference voltage of the flying capacitor is a target value to be adjusted for the flying capacitor. For example, the target value of the three-level direct current converter may be 1/2 times a voltage of a high-voltage power supply. A current of an inductor is also referred to as the inductor current, and may be an instantaneous current value or an average value. The first threshold is not limited in this application. The first threshold may be 0, or the like. It may be understood that, if the absolute value of the difference between the sampling voltage and the reference voltage of the flying capacitor is greater than the first threshold, it indicates that the voltage of the flying capacitor is not adjusted to the target value, and a duty cycle difference between switching transistors connected in parallel to a side of the flying capacitor or a phase difference between carriers of first switching transistors on the side may continue to be adjusted, to control a voltage of the flying capacitor and reduce a voltage stress of the multi-level direct current converter. If the difference between the sampling voltage and the reference voltage of the flying capacitor is less than or equal to the first threshold, it indicates that the voltage of the flying capacitor has been adjusted to the target value, and a current operating state may be maintained and the flying capacitor continues to operate. In this way, operation stability of the multi-level direct current converter can be improved.

A method for adjusting the phase difference and the duty cycle difference is not limited in this application. The switching transistor $Q_1$ and the switching transistor $Q_2$ are used as an example. After the duty cycle difference is determined to be adjusted, adjustment may be performed based on the foregoing adjustment method based on a current direction. For example, when a current flows from a high-voltage power supply to a low-voltage power supply, if the sampling voltage of the flying capacitor $C_{fly}$ is less than the reference voltage of the flying capacitor $C_{fly}$, a duty cycle difference between first switching transistors in the two switching transistor groups may be increased. In other words, a duty cycle of the switching transistor $Q_1$ is increased, and a duty cycle of the switching transistor $Q_2$ is decreased, to increase a flying voltage. Alternatively, when a current flows from a high-voltage power supply to a low-voltage power supply, if the sampling voltage of the flying capacitor $C_{fly}$ is greater than the reference voltage of the flying capacitor $C_{fly}$, a duty cycle difference between first switching transistors in the two switching transistor groups may be decreased. In other words, a duty cycle of the switching transistor $Q_1$ is decreased, and a duty cycle of the switching transistor $Q_2$ is increased, to decrease a flying voltage. Alternatively, when a current flows from a low-voltage power supply to a high-voltage power supply, if the sampling voltage of the flying capacitor $C_{fly}$ is less than the reference voltage of the flying capacitor $C_{fly}$, a duty cycle difference between first switching transistors in the two switching transistor groups may be decreased. In other words, a duty cycle of the switching transistor $Q_1$ is decreased, and a duty cycle of the switching transistor $Q_2$ is increased, to increase a flying voltage. Alternatively, when a current flows from a low-voltage power supply to a high-voltage power supply, if the sampling voltage of the flying capacitor $C_{fly}$ is greater than the reference voltage of the flying capacitor $C_{fly}$, a duty cycle difference between first switching transistors in the two switching transistor groups may be increased. In other words, a duty cycle of the switching transistor $Q_1$ is increased, and a duty cycle of the switching transistor $Q_2$ is decreased, to decrease a flying voltage. In this way, when it is decided to adjust the duty cycle difference, the voltage of the flying capacitor $C_{fly}$ is adjusted based on a direction of the inductor current.

A principle of adjusting the phase difference of the flying capacitor $C_{fly}$ is: increasing the phase difference between the carriers of the first switching transistors (or the second switching transistors), so that charging time (area) of the flying capacitor $C_{fly}$ is greater than discharging time (area) of the flying capacitor $C_{fly}$, to increase the voltage of the flying capacitor $C_{fly}$; or reducing the phase difference between the carriers of the first switching transistors (or the second switching transistors), so that charging time (area) of the flying capacitor $C_{fly}$ is less than discharging time (area) of the flying capacitor $C_{fly}$, to decrease the voltage of the flying capacitor $C_{fly}$. Therefore, in a possible example, when the phase difference between the carriers of the first switching transistors in the two switching transistor groups is determined to be adjusted based on the magnitude of the inductor current, and the sampling voltage of the flying capacitor $C_{fly}$ is less than the reference voltage of the flying capacitor $C_{fly}$, the phase difference between the carriers of the first switching transistors in the two switching transistor groups is increased. Alternatively, when the phase difference between the carriers of the first switching transistors in the two switching transistor groups is determined to be adjusted based on the magnitude of the inductor current, and the sampling voltage of the flying capacitor $C_{fly}$ is greater than the reference voltage of the flying capacitor $C_{fly}$, the phase difference between the carriers of the first switching transistors in the two switching transistor groups is decreased.

In this application, whether a manner of adjusting the phase difference or a manner of adjusting the duty cycle difference is used is not limited. An operating condition state of the multi-level direct current converter may be first analyzed. FIG. 4 to FIG. 9 are operating mode diagrams of a three-level direct current converter according to this application. $V_0$ is a flying voltage $V_{fly}$ at the beginning of a cycle; $V_1$ is a flying voltage $V_{fly}$ at any time in a cycle; $V_2$ is a flying voltage $V_{fly}$ at the end of a cycle; $I_L$ is an inductor current, which is alternatively described by using $i(t)$ in the following formula; N/A/B/C/M is a peak value of the inductor current $I_L$; $T_0$ to $T_3$ are time points of different phases in a switch cycle. It is considered that a deadband d may cause different freewheeling loops in different modes, values of $T_0$ to $T_3$ vary; and m/k/n is a slope of a corresponding straight line in the figure.

In the following, P is a switch cycle, $D_1$ is a duty cycle of a switching transistor $Q_1$, and $D_2$ is a duty cycle of a switching transistor $Q_2$. A duty cycle D of the three-level direct current converter may be understood as a steady-state duty cycle of a converter in an ideal case. In the ideal case, the duty cycle D of the three-level direct current converter is equal to the duty cycle $D_1$ of the switching transistor $Q_1$, and is equal to the duty cycle $D_2$ of the switching transistor $Q_2$. Actually, because the flying voltage deviates from a target value, a duty cycle difference between the switching transistor $Q_1$ and the

switching transistor $Q_2$ or a phase difference between carriers of the switching transistor $Q_1$ and the switching transistor $Q_2$ needs to be adjusted. If the duty cycle D is less than 0.5, it indicates that both the duty cycle $D_1$ of the switching transistor $Q_1$ and the duty cycle $D_2$ of the switching transistor $Q_2$ are less than 0.5. If the duty cycle D is greater than 0.5, it indicates that both the duty cycle $D_1$ of the switching transistor $Q_1$ and the duty cycle $D_2$ of the switching transistor $Q_2$ are greater than 0.5. FIG. 4 to FIG. 9 respectively correspond to a mode 1, a mode 2, a mode 3, a mode 4, a mode 5, and a mode 6.

Mode 1: The duty cycle D is less than 0.5, and the inductor current $I_L$ is always positive, that is, a case of heavy load. Referring to FIG. 4, $T_0 = D_1P$, $T_1 = \dfrac{P}{2}$, $T_2 = \dfrac{P}{2} + D_2$, and $T_3 = P$.

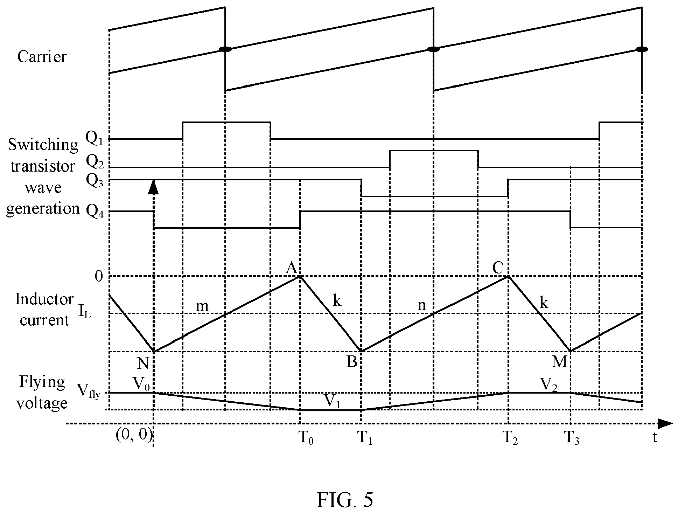

Mode 2: The duty cycle D is less than 0.5, and the inductor current $I_L$ is always negative, that is, a case of heavy load. Referring to FIG. 5, $T_0 = (D_1 + 2d)P$, $T_1 = \dfrac{P}{2}$, $T_2 = \dfrac{P}{2} + (D_2 + 2d)P$, and $T_3 = P$.

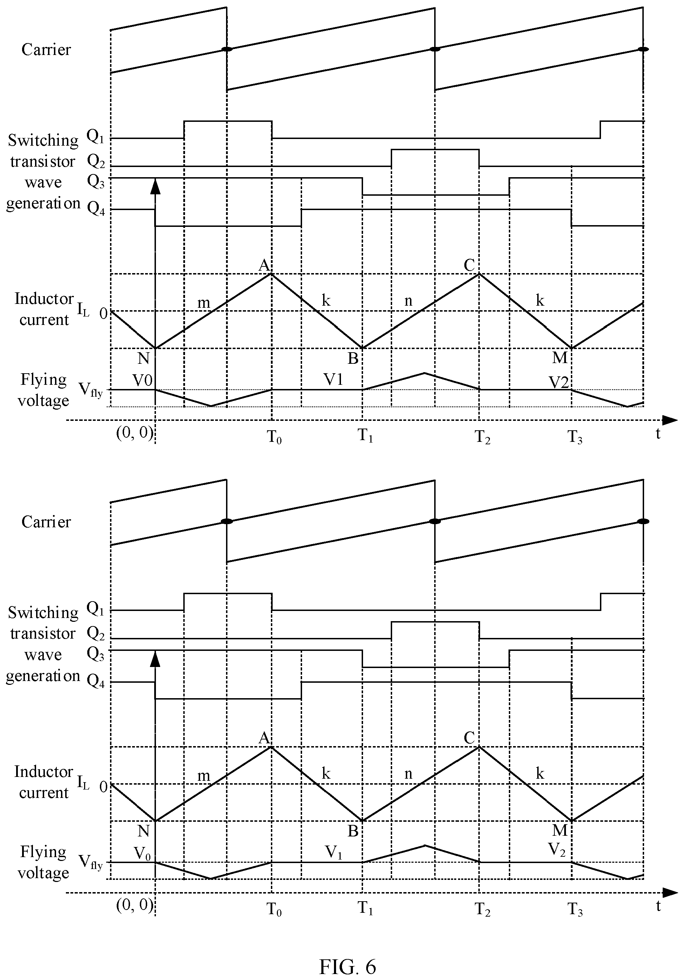

Mode 3: The duty cycle D is less than 0.5, and the inductor current $I_L(t)$ may be negative or positive, that is, a case of light load. Referring to FIG. 6, $T_0 = (D_1 + d)P$, $T_1 = \dfrac{P}{2}$, $T_2 = \dfrac{P}{2} + (D_2 + d)P$, and $T_3 = P$.

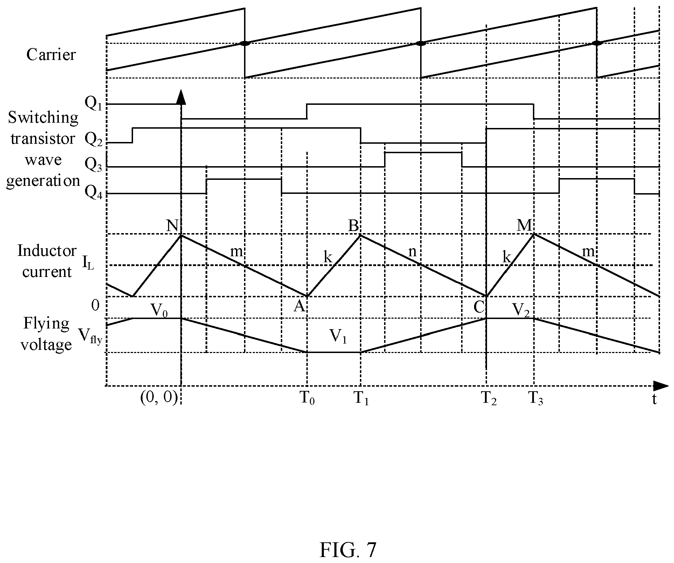

Mode 4: The duty cycle D is greater than 0.5, and the inductor current $I_L$ is always positive, that is, a case of heavy load. Referring to FIG. 7, $T_0 = (1 - D_1)P$, $T_1 = \dfrac{P}{2}$, $T_2 = \dfrac{P}{2} + (1 - D_2)P$, and $T_3 = P$.

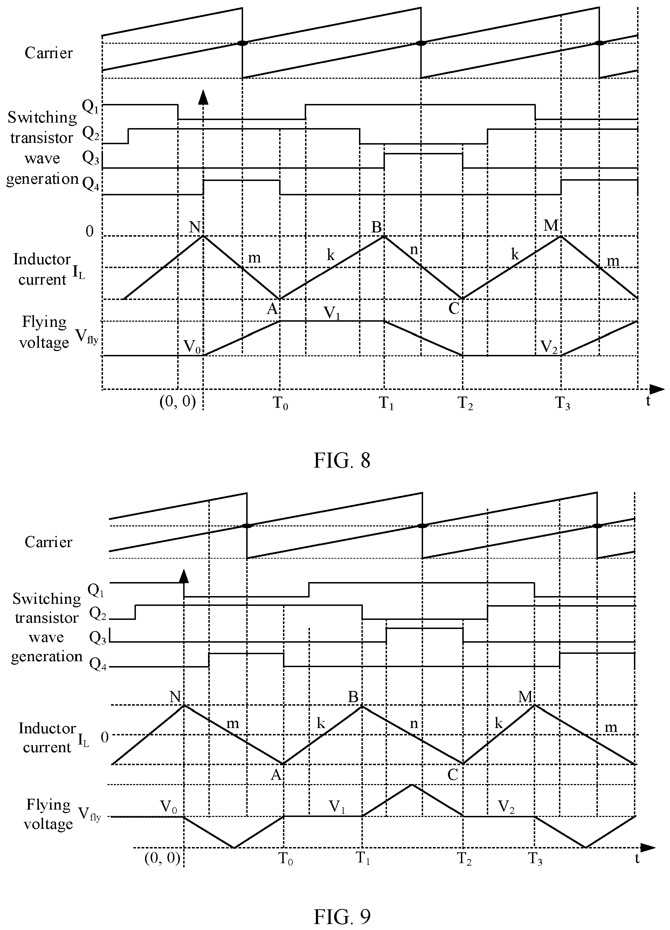

Mode 5: The duty cycle D is greater than 0.5, and the inductor current $I_L$ is always negative, that is, a case of light load. Referring to FIG. 8, $T_0 = [1 - (D_1 + 2d)]P$, $T_1 = \dfrac{P}{2}$, $T_2 = \dfrac{P}{2} + [1 - (D_2 + 2d)]P$, and $T_3 = P$.

Mode 6: The duty cycle D is greater than 0.5, and the inductor current $I_L$ may be negative or positive, that is, a case of light load. Referring to FIG. 9, $T_0 = [1 - (D_1 + d)]P$, $T_1 = \dfrac{P}{2}$, $T_2 = \dfrac{P}{2} + [1 - (D_2 + d)]P$, and $T_3 = P$.

By properly establishing a coordinate system and based on the freewheeling loop of the inductor current in FIG. 4 to FIG. 6, in the mode 1, the mode 2, and the mode 3, the deadband d may be combined into the duty cycle $D_1$ and the duty cycle $D_2$ for unified analysis. Based on the freewheeling loop of the inductor current in FIG. 7 to FIG. 9, in the mode 4, the mode 5, and the mode 6, the deadband d may be combined into the duty cycle $D_1$ and the duty cycle $D_2$ for unified analysis. The following uses the mode 1 and the mode 4 as an example.

In a switch cycle, a voltage variation of the flying capacitor may be obtained by performing integration on a current flowing through the flying capacitor, for example, formula (1).

$$\Delta V_{fly} = V_2 - V_1 = \begin{cases} -\dfrac{1}{C_{fly}}\left(\int_{T_1}^{T_2} i(t)\,dt - \int_0^{T_0} i(t)\,dt\right), D < 0.5 \\ \dfrac{1}{C_{fly}}\left(\int_{T_1}^{T_2} i(t)\,dt - \int_0^{T_0} i(t)\,dt\right), D > 0.5 \end{cases} \qquad \text{Formula (1)}$$

Formula (2) is obtained by calculating a common part in formula (1).

$$\int_{T_1}^{T_2} i(t)\,dt - \int_0^{T_0} i(t)\,dt =$$

$$\frac{1}{2}nt^2 \Big|_{T_1}^{T_2} + (-T_0k + T_1k + mT_0 - nT_1)(T_2 - T_1) - \frac{1}{2}nt^2 \Big|_{T_1}^{T_2} - NT_0 \qquad \text{Formula (2)}$$

For values of m, $n$, and $k$, refer to the following formula, and $L$ in the formula is a magnitude of the inductor.

$$\begin{cases} D < 0.5: m = \dfrac{v_{in} - v_{fly} - v_{out}}{L}, n = \dfrac{v_{fly} - v_{out}}{L}, k = \dfrac{-v_{out}}{L} \\ D > 0.5: m = \dfrac{v_{fly} - v_{out}}{L}, n = \dfrac{v_{in} - v_{fly} - v_{out}}{L}, k = \dfrac{v_{in} - v_{out}}{L} \end{cases}$$

If a phase difference between carriers of the switching transistor $Q_1$ (or a switching transistor $Q_3$) and the switching transistor $Q_2$ (or the switching transistor $Q_4$) is fixed to 180°, impact of different duty cycle differences on the flying voltage may be obtained by adjusting the duty cycle $D_1$ and the duty cycle $D_2$. For example, when D<0.5, the time $T_0$ to the time $T_3$ in the mode 1 are substituted into formula (2) to obtain formula (3).

$$C_{fly}\Delta V_{fly=} - \left\{\frac{P^2}{2}\left[nD_2^2 - mD_1^2 + 2(m-k)D_1D_2 + kD_2 + N(D_2 - D_1)P\right]\right\} \qquad \text{Formula (3)}$$

When D>0.5, the time $T_0$ to the time $T_3$ in the mode 4 are substituted into formula (2) to obtain formula (4).

$$C_{fly}\Delta V_{fly} =$$

$$\frac{P^2}{2}\left[n(1-D_2)^2 - m(1-D_1)^2 + 2(m-k)(1-D_1)(1-D_2) + k(1-D_2)\right]$$

$$+N[(1-D_2) - (1-D_1)]P \qquad \text{Formula (4)}$$

If a duty cycle of the duty cycle D1 and the duty cycle D2 is fixed to D (which may be any fixed value in 0 to 1), and the phase difference between the carriers of the switching transistor $Q_1$ (or the switching transistor $Q_4$) and the switching transistor $Q_2$ (or the switching transistor $Q_3$) is adjusted to $\Delta\theta$, impact of different phase differences on the flying voltage may be obtained, that is, impact of phase shift control on the flying voltage. When D<0.5, the time $T_0$ to the time $T_3$ in the mode 1 are substituted into formula (2) to obtain formula (5).

$$C_{fly}\Delta V_{fly} = D\Delta\theta \frac{v_{out}}{L} P^2 \qquad \text{Formula (5)}$$

When D>0.5, the time $T_0$ to the time $T_3$ in the mode 4 are substituted into formula (2) to obtain formula (6).

$$C_{fly}\Delta V_{fly} = (1-D)\Delta\theta \frac{v_{bus}-v_{out}}{L} P^2 \qquad \text{Formula (6)}$$

According to formula (5) and formula (6), under phase shift control, the flying voltage has a consistent adjustment direction under light and heavy load and positive and negative power flow directions. In other words, the flying voltage increases when the phase difference increases, or the flying voltage decreases when the phase difference decreases. This relationship is not related to the deadband.

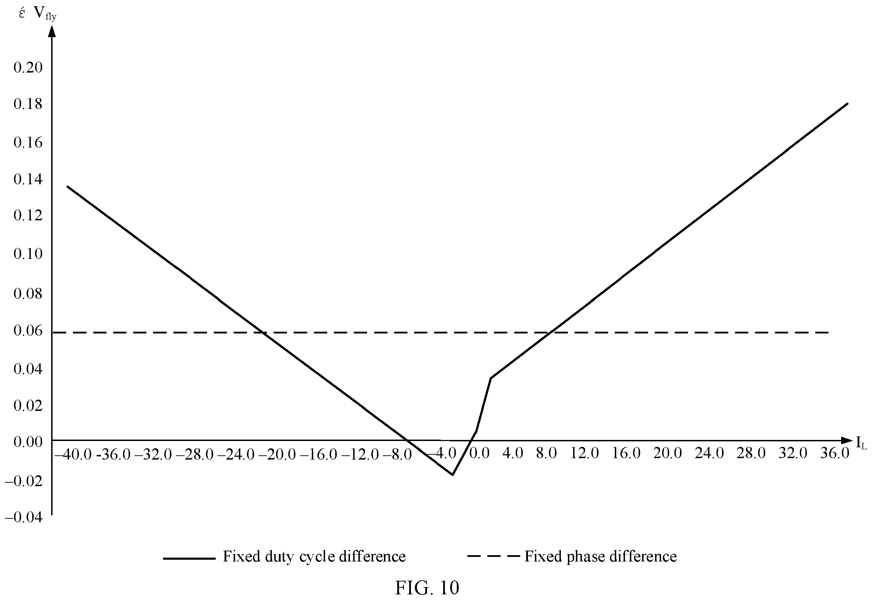

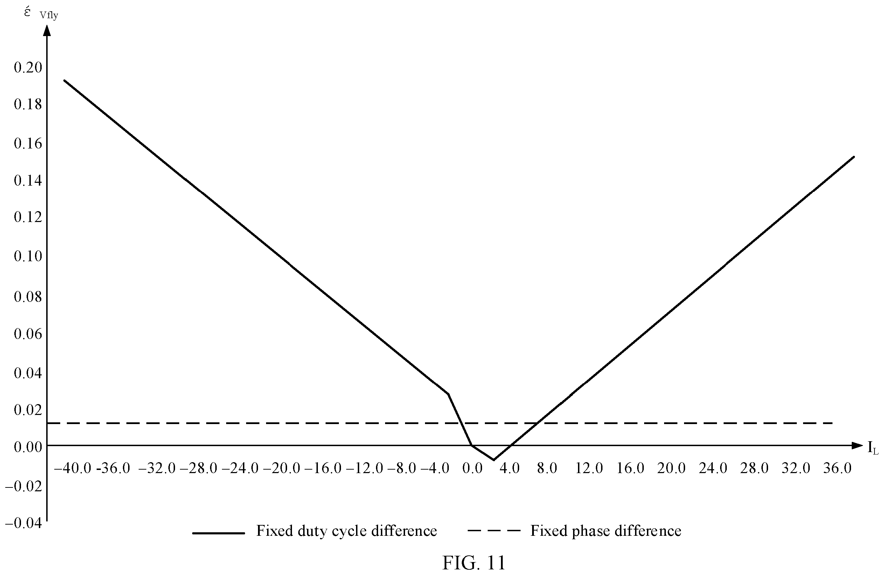

Then, refer to FIG. 10 to FIG. 13. FIG. 10 to FIG. 13 are respectively diagrams of relationships between a duty cycle difference and a flying voltage and a flying voltage and a phase difference and a flying voltage according to this application. FIG. 10 and FIG. 11 are used to describe, in a case of a fixed phase difference and a fixed duty cycle difference, impact on a change of the flying voltage based on different load. A horizontal axis is an inductor current $I_L$, and a vertical axis is a change amount $\triangle V_{fly}$ of the flying voltage. A solid line corresponding to the fixed duty cycle difference reflects an adjustment strength of the voltage of the flying capacitor under different load when a same duty cycle difference is adjusted for the first switching transistor. A dashed line corresponding to the fixed phase difference reflects an adjustment strength of the voltage of the flying capacitor under different load when a same phase difference is adjusted for the first switching transistor. FIG. 10 uses an application scenario in which formula (3) and formula (5) are used, D<0.5, and D=0.34 as an example. FIG. 11 uses an application scenario in which formula (4) and formula (6) are used, D>0.5, and D=0.8 as an example. It can be seen from FIG. 10 and FIG. 11 that under light load (the inductor current may be a high-frequency triangular wave, repeatedly switched between positive and negative, a value is relatively small, and may be a part in which the dashed line is greater than the solid line and is close to a value 0 in the figure), a change value of the flying voltage is small. Moreover, adjusting the duty cycle will cause the flying voltage to change reversely. As the load increases gradually, the change value of the flying voltage gradually increases, so that the flying voltage can be controlled by adjusting the duty cycle under heavy load. In other words, the method for adjusting the duty cycle quickly reduces a control strength of the flying voltage as the load gradually decreases. In contrast, a control strength of the phase shift control is strong under the light load, and weak under the heavy load, so that the phase shift can be controlled under the light load. In other words, the phase difference is adjusted to control the flying voltage.

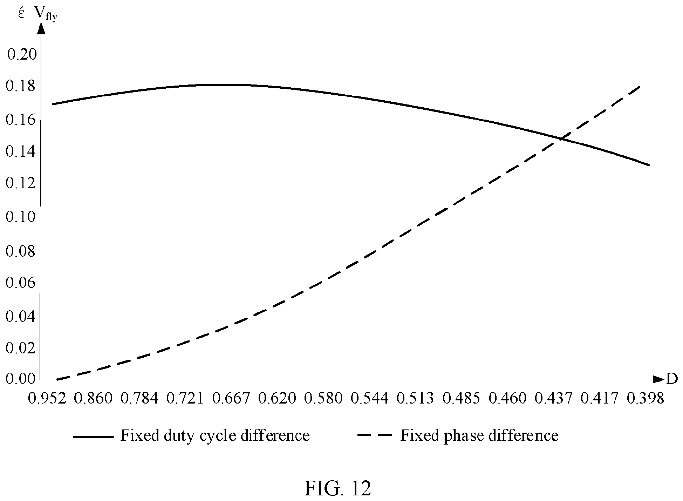

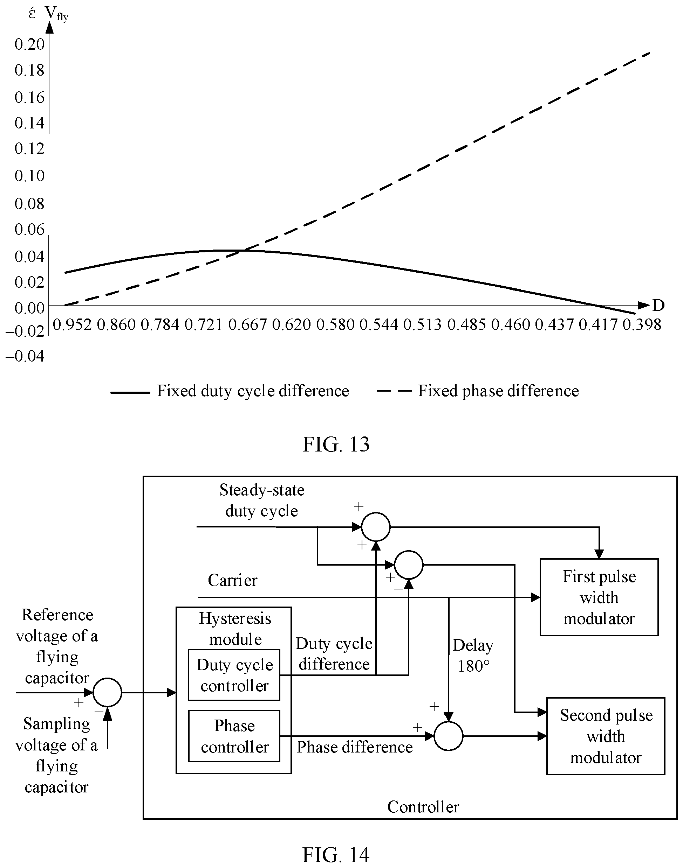

FIG. 12 and FIG. 13 are used to describe impact of the fixed duty cycle difference and the fixed phase difference on a change of the flying voltage under fixed load. A horizontal axis is the duty cycle D, and a vertical axis is a change amount $\triangle V_{fly}$ of the flying voltage. FIG. 12 is applied to the heavy load, and FIG. 13 is applied to the light load. It can be seen from FIG. 12 and FIG. 13 that, in a phase shift control method, as the duty cycle gradually increases, a control strength of the flying voltage quickly decreases. However, under the light load, the phase shift control method can maintain a larger adjustment strength than the duty cycle adjustment method. In this way, under the light load, the flying voltage may be controlled by using the phase shift control method. Under the heavy load, the flying voltage can be controlled by adjusting the duty cycle.

Based on this, in a possible example, a controller is specifically configured to adjust a phase difference between carriers of first switching transistors in two switching transistor groups in response to that an inductor current is less than a second threshold. Alternatively, the controller is specifically configured to adjust a duty cycle difference between the first switching transistors in the two switching transistor groups in response to that the inductor current is greater than a third threshold. Alternatively, the controller is specifically configured to: in response to that the inductor current is greater than or equal to a second threshold and less than or equal to a third threshold, adjust, according to an adjustment method at a previous moment, the duty cycle difference between the first switching transistors in the two switching transistor groups or the phase difference between the carriers of the first switching transistors in the two switching transistor groups.

Values of the second threshold and the third threshold are not limited in this application, and the second threshold is less than the third threshold. It may be understood that, if the current of the inductor is less than the second threshold, it indicates that the current of the inductor is small, and the current may be a case of light load. On the premise that the duty cycle difference is not adjusted, the phase difference between the carriers of the first switching transistors in the two switching transistor groups may be adjusted by using a phase shift control method. If the current of the inductor is greater than the third threshold, it indicates that the current of the inductor is large, and the current may be a heavy load case. On the premise that the phase difference is not adjusted, the duty cycle difference between the first switching transistors in the two switching transistor groups may be adjusted by using a duty cycle adjustment method. If the current of the inductor is greater than or equal to the second threshold and less than or equal to the third threshold, the inductor may be in an intermediate state of light load and heavy load, and the adjustment may be performed in an adjustment manner at a previous moment. For example, if the phase shift control method is used at the previous moment, the phase shift control method is still used; or if the duty cycle adjustment method is used at the previous moment, the duty cycle adjustment method is still used. In this way, the flying voltage may be controlled by using the foregoing three cases, so that the voltage of the controlled flying capacitor keeps smooth transition.

In a possible example, the controller may include a hysteresis module, and a first pulse width modulator and a second pulse width modulator that are connected to the hysteresis module. The first pulse width modulator is configured to adjust a phase or a duty cycle of a first switching transistor (or a second switching transistor) in a switching transistor group connected to the flying capacitor, and the second pulse width modulator is configured to adjust a phase or a duty cycle of a first switching transistor (or a second switching transistor) in another switching transistor group connected to the flying capacitor. For example, the first pulse width modulator is configured to adjust a phase or a duty cycle of the switching transistor $Q_1$ or the switching transistor $Q_4$, and the second pulse width modulator is configured to adjust a phase or a duty cycle of the switching transistor $Q_2$ or the switching transistor $Q_3$. The hysteresis module may include a duty cycle controller and a phase controller. The duty cycle controller is configured to control the first pulse width modulator and the second pulse width modulator to execute a duty cycle control loop, to adjust a duty cycle difference between two switching transistors. The phase controller is configured to control the first pulse width modulator and the second pulse width modulator to execute a phase control loop, to adjust a phase difference between carriers of two switching transistors.

The hysteresis module is configured to: in response to that the absolute value of the difference between the sampling voltage and the reference voltage of the flying capacitor is greater than the first threshold, control, based on the magnitude of the inductor current, the first pulse width modulator and the second pulse width modulator to adjust the phase difference between carriers of first switching transistors in the two switching transistor groups or the duty cycle difference between first switching transistors in the two switching transistor groups.

The hysteresis module is specifically configured to: when hysteresis module determines to adjust the phase difference between the carriers of the first switching transistors in the two switching transistor groups based on a magnitude of the inductor current, increase the phase difference between the carriers of the first switching transistors in the two switching transistor groups if the sampling voltage of the flying capacitor is less than the reference voltage of the flying capacitor. Alternatively, if the sampling voltage of the flying capacitor is greater than the reference voltage of the flying capacitor, the phase difference between the carriers of the first switching transistors in the two switching transistor groups is decreased.

The hysteresis module is specifically configured to: when the hysteresis module determines to adjust the duty cycle difference between the first switching transistors in the two switching transistor groups based on the magnitude of the inductor current, increase the duty cycle difference between the first switching transistors in the two switching transistor groups if a current flows from a high-voltage power supply to a low-voltage power supply, and the sampling voltage of the flying capacitor is less than the reference voltage of the flying capacitor; or decrease the duty cycle difference between the first switching transistors in the two switching transistor groups if a current flows from a high-voltage power supply to a low-voltage power supply, and the sampling voltage of the flying capacitor is greater than the reference voltage of the flying capacitor; or decrease the duty cycle difference between the first switching transistors in the two switching transistor groups if a current flows from a low-voltage power supply to a high-voltage power supply, and the sampling voltage of the flying capacitor is less than the reference voltage of the flying capacitor; or increase the duty cycle difference between the first switching transistors in the two switching transistor groups if a current flows from a low-voltage power supply to a high-voltage power supply, and the sampling voltage of the flying capacitor is greater than the reference voltage of the flying capacitor.

The hysteresis module is specifically configured to: in response to that the current is less than the second threshold, control the first pulse width modulator and the second pulse width modulator to adjust the phase difference between the carriers of the first switching transistors in the two switching transistor groups; or in response to that the current is greater than the third threshold, control the first pulse width modulator and the second pulse width modulator to adjust the duty cycle difference between the first switching transistors in the two switching transistor groups; or in response to that the current is greater than or equal to the second threshold and less than or equal to the third threshold, control the first pulse width modulator and the second pulse width modulator according to the adjustment method at a previous moment, to adjust the phase difference between the carriers of the first switching transistors in the two switching transistor groups or the duty cycle difference between the first switching transistors in the two switching transistor groups.

An example in which the first switching transistors are the switching transistor $Q_1$ and the switching transistor $Q_2$ is used for description. FIG. 14 is a schematic flowchart of adjusting a voltage of a flying capacitor by a controller according to this application. As shown in FIG. 14, a hysteresis module may first determine whether an absolute value of a difference between a sampling voltage $V_{fly\_ad}$ of a flying capacitor and a reference voltage $V_{fly\_ref}$ of the flying capacitor is greater than a first threshold. If the difference between the sampling voltage $V_{fly\_ad}$ of the flying capacitor and the reference voltage $V_{fly\_ref}$ of the flying capacitor is greater than the first threshold, and an average value $i_{LAVG}$ of an inductor current is less than a second threshold, a phase shift control loop corresponding to a phase controller may be controlled to operate on the premise that a duty cycle is controlled to remain unchanged (an output limiting linear change of a duty cycle control loop is zero), so that a first pulse width modulator applies a current output result of the duty cycle control loop to a steady-state duty cycle based on a direction of the inductor current. Then, a second pulse width modulator adds the output result of the phase shift control loop to a carrier of a switching transistor corresponding to the second pulse width modulator, so that a phase difference between carriers of a switching transistor $Q_1$ corresponding to the first pulse width modulator and a switching transistor $Q_2$ corresponding to the second pulse width modulator is dynamically adjusted around 180°. When $i_{LAVG}$ is greater than a third threshold, a duty cycle control loop corresponding to a duty cycle controller may be controlled to operate on the premise that the control phase difference remains unchanged, so that the first pulse width modulator and the second pulse width modulator apply, according to the direction of the inductor current, the current output result of the phase shift control loop to the carrier corresponding to the second pulse width modulator, so that the duty cycle difference between the switching transistor $Q_1$ and the switching transistor $Q_2$ is dynamically adjusted around 0. When $i_{LAVG}$ is between the second threshold and the third threshold, keeping the adjustment manner at the previous moment to control the phase shift control loop corresponding to the phase controller to operate, so that the first pulse width modulator and the second pulse width modulator adjust the phase difference between the carriers of the switching transistor $Q_1$ and the switching transistor $Q_2$, or control the duty cycle control loop corresponding to the duty cycle controller to operate, so that the first pulse width modulator and the second pulse width modulator adjust the duty cycle difference between the switching transistor $Q_1$ and the switching transistor $Q_2$.

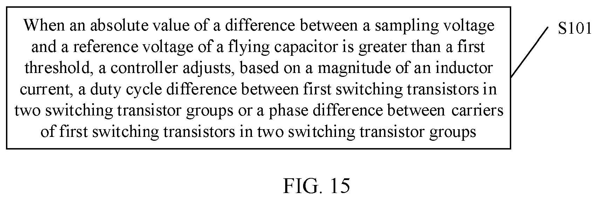

FIG. 15 is a schematic flowchart of a voltage control method for a flying capacitor according to an embodiment of this application. The flying capacitor may be used in a multi-level direct current converter shown in FIG. 3. The multi-level direct current converter includes at least one flying capacitor, two switching transistor groups connected to the flying capacitor, an inductor connected to each switching transistor group and a positive electrode of a low-voltage of the multi-level direct current converter, and a controller configured to control the switching transistor groups. Each switching transistor group includes a first switching transistor and a second switching transistor whose on and off states are complementary. As shown in FIG. 15, the voltage control method may include step S101.

S101: When an absolute value of a difference between a sampling voltage and a reference voltage of a flying capacitor is greater than a first threshold, a controller adjusts, based on a magnitude of an inductor current, a duty cycle difference between first switching transistors in the two switching transistor groups or a phase difference between carriers of first switching transistors in the two switching transistor groups.

It may be understood that, if the absolute value of the difference between the sampling voltage and the reference voltage of the flying capacitor is greater than the first threshold, it indicates that a voltage of the flying capacitor is not adjusted to a target value, and a phase difference between switching transistors connected in parallel to a side of the flying capacitor or a duty cycle difference between switching transistors connected in parallel to the side may be further adjusted, to control the voltage of the flying capacitor. This improves operation stability of the multi-level direct current converter.

In a possible example, a method for adjusting, based on the magnitude of the inductor current, the duty cycle difference between the first switching transistors in the two switching transistor groups or the phase difference between the carriers of the first switching transistors in the two switching transistor groups may include the following step: when it is determined to adjust, based on the magnitude of the inductor current, the phase difference between the carriers of the first switching transistors in the two switching transistor groups, and the sampling voltage is less than the reference voltage of the flying capacitor, increasing the phase difference between the carriers of the first switching transistors in the two switching transistor groups; or when it is determined to adjust, based on the magnitude of the inductor current, the phase difference between the carriers of the first switching transistors in the two switching transistor groups, and the sampling voltage is greater than the reference voltage of the flying capacitor, decrease the phase difference between the carriers of the first switching transistors in the two switching transistor groups. In this way, the voltage of the flying capacitor is increased by increasing the phase difference between the carriers of the first switching transistors in the two switching transistor groups. The voltage of the flying capacitor is decreased by reducing the phase difference between the carriers of the first switching transistors in the two switching transistor groups.

In a possible example, a method for adjusting, based on the magnitude of the inductor current, the duty cycle difference between the first switching transistors in the two switching transistor groups or the phase difference between the carriers of the first switching transistors in two switching transistor groups may include the following step: when it is determined to adjust the duty cycle difference between the first switching transistors in the two switching transistor groups based on the magnitude of the inductor current, increasing the duty cycle difference between the first switching transistors in the two switching transistor groups if a current flows from a high-voltage power supply to a low-voltage power supply, and the sampling voltage of the flying capacitor is less than the reference voltage of the flying capacitor; or decreasing the duty cycle difference between the first switching transistors in the two switching transistor groups if a current flows from a high-voltage power supply to a low-voltage power supply, and the sampling voltage of the flying capacitor is greater than the reference voltage of the flying capacitor; or decreasing the duty cycle difference between the first switching transistors in the two switching transistor groups if a current flows from a low-voltage power supply to a high-voltage power supply, and the sampling voltage of the flying capacitor is less than the reference voltage of the flying capacitor; or increasing the duty cycle difference between the first switching transistors in the two switching transistor groups if a current flows from a low-voltage power supply to a high-voltage power supply, and the sampling voltage of the flying capacitor is greater than the reference voltage of the flying capacitor. In this way, when the duty cycle difference is determined to be adjusted, the voltage of the flying capacitor is adjusted based on the direction of the inductor current.

In a possible example, a method for adjusting, based on the magnitude of the inductor current, the duty cycle difference between the first switching transistors in two switching transistor groups or the phase difference between the carriers of the first switching transistors in the two switching transistor groups may include the following step: adjusting the phase difference between the carriers of the first switching transistors in the two switching transistor groups when the inductor current is less than a second threshold; or adjusting the duty cycle difference between the first switching transistors in the two switching transistor groups when the inductor current is greater than a third threshold; or when the inductor current is greater than or equal to a second threshold and less than or equal to a third threshold, adjusting, according to the adjustment method at the previous moment, the duty cycle difference between the first switching transistors in the two switching transistor groups or the phase difference between the carriers of the first switching transistors in the two switching transistor groups. In this way, the flying voltage may be controlled by using the foregoing three cases, so that the controlled voltage of the flying capacitor keeps smooth transition.

An embodiment of this application further provides a control apparatus. The control apparatus includes a controller and a memory. The memory is configured to store instructions, and the controller is configured to invoke the instructions stored in the memory to perform the method in any one of the foregoing aspects.

A person of ordinary skill in the art may understand that all or a part of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a removable storage device, a read-only memory (read-only memory, ROM), a random access memory (random access memory, RAM), a magnetic disk, or an optical disc.

## Claims

1. A multi-level direct current converter, wherein the multi-level direct current converter comprises:

   at least one flying capacitor,
   two switching transistor groups connected to the flying capacitor,
   an inductor, wherein the inductor is connected to each of the switching transistor groups and to a positive electrode end of a low-voltage power supply of the multi-level direct current converter, and
   a controller configured to control the switching transistor groups, wherein
   the first switching transistor group comprises a first switching transistor, $Q_1$, and a second switching transistor, $Q_4$, whose on and off states are complementary; and
   the second switching transistor group comprises a first switching transistor, $Q_2$, and a second switching transistor, $Q_3$, whose on and off states are complementary; and a drain electrode of $Q_1$ is connected to a positive end of a high-voltage power supply; and

a source electrode of $Q_1$ is connected to a drain electrode of $Q_2$ and one end of the flying capacitor; and

the other end of the flying capacitor is connected to a source electrode $Q_3$ and a drain electrode of $Q_4$; and

the inductor is connected to a source electrode of $Q_2$ and a drain electrode of $Q_3$; and

the controller is configured to stabilize the voltage of the flying capacitor at a target value by: when an absolute value of a difference between a sampling voltage and a reference voltage of the flying capacitor is greater than a first threshold, indicating that a voltage of the flying capacitor is not adjusted to a target value, adjust, based on a magnitude of an inductor current, a duty cycle difference between first switching transistors in the two switching transistor groups or a phase difference between carriers of first switching transistors in the two switching transistor groups to control the voltage of the flying capacitor and reduce a voltage stress of the multi-level direct current converter;

wherein the controller is further configured to:

adjust the phase difference between the carriers of the first switching transistors in the two switching transistor groups when the inductor current is less than a second threshold; and

adjust the duty cycle difference between the first switching transistors in the two switching transistor groups when the inductor current is greater than a third threshold; and

when the inductor current is greater than or equal to a second threshold and less than or equal to a third threshold, adjust, according to an adjustment method at a previous moment, the duty cycle difference between the first switching transistors in the two switching transistor groups or the phase difference between the carriers of the first switching transistors in the two switching transistor groups.

2. The multi-level direct current converter according to claim 1, wherein the controller is specifically configured to increase the phase difference between the carriers of the first switching transistors in the two switching transistor groups when the controller determines to adjust the phase difference between the carriers of the first switching transistors in the two switching transistor groups based on the magnitude of the inductor current, and the sampling voltage of the flying capacitor is less than the reference voltage of the flying capacitor.

3. The multi-level direct current converter according to claim 1, wherein the controller is specifically configured to decrease the phase difference between the carriers of the first switching transistors in the two switching transistor groups when the controller determines to adjust the phase difference between the carriers of the first switching transistors in the two switching transistor groups based on the magnitude of the inductor current, and the sampling voltage of the flying capacitor is greater than the reference voltage of the flying capacitor.

4. A voltage control method for a flying capacitor, wherein the flying capacitor is used in a multi-level direct current converter, the multi-level direct current converter further comprises two switching transistor groups, an inductor, and a controller, and

the first switching transistor groups each comprises a first switching transistor, $Q_1$, and a second switching transistor, $Q_4$, whose on and off states are complementary, the first switching transistor is connected to one end of a high-voltage power supply of the multi-level direct current converter, and the second switching transistor is connected to the other end of the high-voltage power supply of the multi-level direct current converter; and

the second switching transistor group comprises a first switching transistor, $Q_2$, and a second switching transistor, $Q_3$, whose on and off states are complementary; and

a drain electrode of $Q_1$ is connected to a positive end of a high-voltage power supply; and

a source electrode of $Q_1$ is connected to a drain electrode of $Q_2$ and one end of the flying capacitor; and

the other end of the flying capacitor is connected to a source electrode $Q_3$ and a drain electrode of $Q_4$; and

the inductor is connected to a source electrode of $Q_2$ and a drain electrode of $Q_3$; and

the voltage control method comprises:

when an absolute value of a difference between a sampling voltage and a reference voltage of the flying capacitor is greater than a first threshold, indicating that a voltage of the flying capacitor is not adjusted to a target value, adjusting (S101), by the controller based on a magnitude of an inductor current, a duty cycle difference between first switching transistors in the two switching transistor groups or a phase difference between carriers of first switching transistors in the two switching transistor groups to control the voltage of the flying capacitor and reduce a voltage stress of the multi-level direct current converter; and the method further comprises

adjusting, by the controller, the phase difference between the carriers of the first switching transistors in the two switching transistor groups when the inductor current is less than a second threshold; or
adjusting, by the controller, the duty cycle difference between the first switching transistors in the two switching transistor groups when the inductor current is greater than a third threshold; or
when the inductor current is greater than or equal to a second threshold and less than or equal to a third threshold, adjusting, by the controller according to an adjustment method at a previous moment, the duty cycle difference between the first switching transistors in the two switching transistor groups or the phase difference between the carriers of the first switching transistors in the two switching transistor groups.

5. The voltage control method according to claim 4, wherein the adjusting, by the controller based on a magnitude of an inductor current, a duty cycle difference between first switching transistors in the two switching transistor groups or a phase difference between carriers of first switching transistors in the two switching transistor groups comprises:

increasing, by the controller, the phase difference between the carriers of the first switching transistors in the two switching transistor groups when the phase difference between the carriers of the first switching transistors in the two switching transistor groups is determined to be adjusted based on the magnitude of the inductor current, and the sampling voltage of the flying capacitor is less than the reference voltage of the flying capacitor; or
decreasing, by the controller, the phase difference between the carriers of the first switching transistors in the two switching transistor groups when the phase difference between the carriers of the first switching transistors in the two switching transistor groups is determined to be adjusted based on the magnitude of the inductor current, and the sampling voltage of the flying capacitor is greater than the reference voltage of the flying capacitor.

6. A control apparatus, wherein the control apparatus comprises a controller as specified in claim 1 and a memory, the memory is configured to store instructions, and the controller, when comprised by the multi-level direct current converter according to claim 1, is configured to invoke the instructions stored in the memory, to perform the voltage control method according to any one of claims 4 to 5.

**Patentansprüche**

1. Mehrstufiger Gleichstromwandler, wobei der mehrstufige Gleichstromwandler Folgendes umfasst:

mindestens einen fliegenden Kondensator,
zwei Schalttransistorgruppen, die mit dem fliegenden Kondensator verbunden sind,
einen Induktor, wobei der Induktor mit jeder der Schalttransistorgruppen und mit einem positiven Elektrodenende einer Niederspannungsversorgung des mehrstufigen Gleichstromwandlers verbunden ist, und
eine Steuereinheit, die dazu konfiguriert ist, die Schalttransistorgruppen zu steuern, wobei
die erste Schalttransistorgruppe einen ersten Schalttransistor, $Q_1$, und einen zweiten Schalttransistor, $Q_1$, umfasst, deren Ein- und Aus-Zustände komplementär sind; und
die zweite Schalttransistorgruppe einen ersten Schalttransistor, $Q_2$, und einen zweiten Schalttransistor, $Q_3$, umfasst, deren Ein- und Aus-Zustände komplementär sind; und eine Drain-Elektrode von $Q_1$ mit einem positiven Ende einer Hochspannungsversorgung verbunden ist; und
eine Source-Elektrode von $Q_1$ mit einer Drain-Elektrode von $Q_2$ und einem Ende des fliegenden Kondensators verbunden ist; und
das andere Ende des fliegenden Kondensators mit einer Source-Elektrode $Q_3$ und einer Drain-Elektrode $Q_4$ verbunden ist; und
der Induktor mit einer Source-Elektrode von $Q_2$ und einer Drain-Elektrode von $Q_3$ verbunden ist; und
die Steuereinheit dazu konfiguriert ist, die Spannung des fliegenden Kondensators wie folgt auf einen Zielwert zu stabilisieren: wenn ein Absolutwert einer Differenz zwischen einer Abtastspannung und einer Referenzspannung des fliegenden Kondensators größer als ein erster Schwellenwert ist, was darauf hindeutet, dass eine Spannung des fliegenden Kondensators nicht auf einen Zielwert eingestellt ist, Anpassen einer Tastverhältnisdifferenz zwischen ersten Schalttransistoren in den beiden Schalttransistorgruppen oder einer Phasendifferenz zwischen Trägern der ersten Schalttransistoren in den beiden Schalttransistorgruppen auf Grundlage einer Stärke eines Induktorstroms, um die Spannung des fliegenden Kondensators zu steuern und eine Spannungsbelastung des mehrstufigen Gleichstromwandlers zu reduzieren;
wobei die Steuereinheit ferner zu Folgendem konfiguriert ist:

Anpassen der Phasendifferenz zwischen den Trägern der ersten Schalttransistoren in den beiden Schalttransistorgruppen, wenn der Induktorstrom kleiner als ein zweiter Schwellenwert ist; und

Anpassen der Tastverhältnisdifferenz zwischen den ersten Schalttransistoren in den beiden Schalttransistorgruppen, wenn der Induktorstrom größer als ein dritter Schwellenwert ist; und

wenn der Induktorstrom größer oder gleich einem zweiten Schwellenwert und kleiner oder gleich einem dritten Schwellenwert ist, Anpassen der Tastverhältnisdifferenz zwischen den ersten Schalttransistoren in den beiden Schalttransistorgruppen oder der Phasendifferenz zwischen den Trägern der ersten Schalttransistoren in den beiden Schalttransistorgruppen gemäß einem Anpassungsverfahren zu einem früheren Zeitpunkt.

2. Mehrstufiger Gleichstromwandler nach Anspruch 1, wobei die Steuereinheit speziell dazu konfiguriert ist, die Phasendifferenz zwischen den Trägern der ersten Schalttransistoren in den beiden Schalttransistorgruppen zu erhöhen, wenn die Steuereinheit bestimmt, die Phasendifferenz zwischen den Trägern der ersten Schalttransistoren in den beiden Schalttransistorgruppen auf Grundlage der Stärke des Induktorstroms anzupassen, und die Abtastspannung des fliegenden Kondensators kleiner als die Referenzspannung des fliegenden Kondensators ist.

3. Mehrstufiger Gleichstromwandler nach Anspruch 1, wobei die Steuereinheit speziell dazu konfiguriert ist, die Phasendifferenz zwischen den Trägern der ersten Schalttransistoren in den beiden Schalttransistorgruppen zu verringern, wenn die Steuereinheit bestimmt, die Phasendifferenz zwischen den Trägern der ersten Schalttransistoren in den beiden Schalttransistorgruppen auf Grundlage der Stärke des Induktorstroms anzupassen, und die Abtastspannung des fliegenden Kondensators größer als die Referenzspannung des fliegenden Kondensators ist.

4. Spannungssteuerungsverfahren für einen fliegenden Kondensator, wobei der fliegende Kondensator in einem mehrstufigen Gleichstromwandler verwendet wird, wobei der mehrstufige Gleichstromwandler ferner zwei Schalttransistorgruppen, einen Induktor und eine Steuereinheit umfasst, und

die ersten Schalttransistorgruppen jeweils einen ersten Schalttransistor, $Q_1$, und einen zweiten Schalttransistor, $Q_4$, umfassen, deren Ein- und Aus-Zustände komplementär sind, wobei der erste Schalttransistor mit einem Ende einer Hochspannungsversorgung des mehrstufigen Gleichstromwandlers verbunden ist und der zweite Schalttransistor mit dem anderen Ende der Hochspannungsversorgung des mehrstufigen Gleichstromwandlers verbunden ist; und

die zweite Schalttransistorgruppe einen ersten Schalttransistor, $Q_2$, und einen zweiten Schalttransistor, $Q_3$, umfasst, deren Ein- und Aus-Zustände komplementär sind; und die Drain-Elektrode von $Q_1$ mit einem positiven Ende einer Hochspannungsquelle verbunden ist; und

eine Source-Elektrode von $Q_1$ mit einer Drain-Elektrode von $Q_2$ und einem Ende des fliegenden Kondensators verbunden ist; und das andere Ende des fliegenden Kondensators mit einer Source-Elektrode $Q_3$ und einer Drain-Elektrode $Q_4$ verbunden ist; und der Induktor mit einer Source-Elektrode von $Q_2$ und einer Drain-Elektrode von $Q_3$ verbunden ist; und

das Spannungssteuerungsverfahren Folgendes umfasst:

wenn ein Absolutwert einer Differenz zwischen einer Abtastspannung und einer Referenzspannung des fliegenden Kondensators größer als ein erster Schwellenwert ist, was darauf hindeutet, dass eine Spannung des fliegenden Kondensators nicht auf einen Zielwert eingestellt ist, Anpassen (S101) einer Tastverhältnisdifferenz zwischen den ersten Schalttransistoren in den beiden Schalttransistorgruppen oder einer Phasendifferenz zwischen Trägern der ersten Schalttransistoren in den beiden Schalttransistorgruppen durch die Steuereinheit auf Grundlage einer Stärke eines Induktorstroms, um die Spannung des fliegenden Kondensators zu steuern und eine Spannungsbelastung des mehrstufigen Gleichstromwandlers zu reduzieren; und wobei das Verfahren ferner Folgendes umfasst:

Anpassen der Phasendifferenz zwischen den Trägern der ersten Schalttransistoren in den beiden Schalttransistorgruppen durch die Steuereinheit, wenn der Induktorstrom kleiner als ein zweiter Schwellenwert ist; oder

Anpassen der Tastverhältnisdifferenz zwischen den ersten Schalttransistoren in den beiden Schalttransistorgruppen durch die Steuereinheit, wenn der Induktorstrom größer als ein dritter Schwellenwert ist; oder

wenn der Induktorstrom größer oder gleich einem zweiten Schwellenwert und kleiner oder gleich einem dritten Schwellenwert ist, Anpassen der Tastverhältnisdifferenz zwischen den ersten Schalttransistoren in den beiden Schalttransistorgruppen oder der Phasendifferenz zwischen den Trägern der ersten Schalttransistoren in den beiden Schalttransistorgruppen durch die Steuereinheit gemäß einem Anpassungsverfahren zu einem früheren Zeitpunkt.

5. Spannungssteuerungsverfahren nach Anspruch 4, wobei das Anpassen einer Tastverhältnisdifferenz zwischen ersten Schalttransistoren in den beiden Schalttransistorgruppen oder einer Phasendifferenz zwischen Trägern erster Schalttransistoren in den beiden Schalttransistorgruppen durch die Steuereinheit auf Grundlage einer Stärke eines Induktorstroms Folgendes umfasst:

Erhöhen der Phasendifferenz zwischen den Trägern der ersten Schalttransistoren in den beiden Schalttransistorgruppen durch die Steuereinheit, wenn bestimmt wird, dass die Phasendifferenz zwischen den Trägern der ersten Schalttransistoren in den beiden Schalttransistorgruppen auf Grundlage der Stärke des Induktorstroms anzupassen ist, und die Abtastspannung des fliegenden Kondensators kleiner als die Referenzspannung des fliegenden Kondensators ist; oder

Verringern der Phasendifferenz zwischen den Trägern der ersten Schalttransistoren in den beiden Schalttransistorgruppen durch die Steuereinheit, wenn bestimmt wird, dass die Phasendifferenz zwischen den Trägern der ersten Schalttransistoren in den beiden Schalttransistorgruppen auf Grundlage der Stärke des Induktorstroms anzupassen ist, und die Abtastspannung des fliegenden Kondensators größer als die Referenzspannung des fliegenden Kondensators ist.

6. Steuerungsvorrichtung, wobei die Steuerungsvorrichtung eine Steuereinheit nach Anspruch 1 und einen Speicher umfasst, wobei der Speicher dazu konfiguriert ist, Anweisungen zu speichern, und die Steuereinheit, wenn der mehrstufige Gleichstromwandler nach Anspruch 1 sie umfasst, dazu konfiguriert ist, die im Speicher gespeicherten Anweisungen aufzurufen, um das Spannungssteuerungsverfahren nach einem der Ansprüche 4 bis 5 durchzuführen.


## Revendications

1. Convertisseur de courant continu multiniveau, dans lequel le convertisseur de courant continu multiniveau comprend :

au moins un condensateur volant,

deux groupes de transistors de commutation connectés au condensateur volant,

une inductance, dans lequel l'inductance est connectée à chacun des groupes de transistors de commutation et à une extrémité d'électrode positive d'une alimentation basse tension du convertisseur de courant continu multiniveau, et

un dispositif de commande configuré pour commander les groupes de transistors de commutation, dans lequel le premier groupe de transistors de commutation comprend un premier transistor de commutation, $Q_1$, et un second transistor de commutation, $Q_4$, dont les états marche et arrêt sont complémentaires ; et

le second groupe de transistors de commutation comprend un premier transistor de commutation, $Q_2$, et un second transistor de commutation, $Q_3$, dont les états marche et arrêt sont complémentaires ; et une électrode de drain de $Q_1$ est connectée à une extrémité positive d'une alimentation haute tension ; et

une électrode source de $Q_1$ est connectée à une électrode de drain de $Q_2$ et à une extrémité du condensateur volant ; et

l'autre extrémité du condensateur volant est connectée à une électrode source de $Q_3$ et à une électrode de drain de $Q_4$ ; et

l'inductance est connectée à une électrode source de $Q_2$ et à une électrode de drain de $Q_3$ ; et

le dispositif de commande est configuré pour stabiliser la tension du condensateur volant à une valeur cible par le biais des étapes suivantes : lorsqu'une valeur absolue d'une différence entre une tension d'échantillonnage et une tension de référence du condensateur volant est supérieure à un premier seuil, indiquer qu'une tension du condensateur volant n'est pas ajustée à une valeur cible, ajuster, sur la base d'une amplitude d'un courant d'inductance, une différence de rapport cyclique entre les premiers transistors de commutation dans les deux groupes de transistors de commutation ou une différence de phase entre les porteuses des premiers transistors de commutation dans les deux groupes de transistors de commutation pour commander la tension du condensateur volant et réduire une contrainte de tension du convertisseur de courant continu multiniveau ;

dans lequel le dispositif de commande est également configuré pour :

ajuster la différence de phase entre les porteuses des premiers transistors de commutation dans les deux groupes de transistors de commutation lorsque le courant d'inductance est inférieur à un deuxième seuil ; et

ajuster la différence de rapport cyclique entre les premiers transistors de commutation dans les deux groupes de transistors de commutation lorsque le courant d'inductance est supérieur à un troisième seuil ; et

lorsque le courant d'inductance est supérieur ou égal à un deuxième seuil et inférieur ou égal à un troisième seuil, ajuster, selon un procédé d'ajustement à un moment antérieur, la différence de rapport cyclique entre les premiers transistors de commutation dans les deux groupes de transistors de commutation ou la différence de phase entre les porteuses des premiers transistors de commutation dans les deux groupes de transistors de commutation.

2. Convertisseur de courant continu multiniveau selon la revendication 1, dans lequel le dispositif de commande est spécifiquement configuré pour augmenter la différence de phase entre les porteuses des premiers transistors de commutation dans les deux groupes de transistors de commutation lorsque le dispositif de commande détermine d'ajuster la différence de phase entre les porteuses des premiers transistors de commutation dans les deux groupes de transistors de commutation sur la base de l'amplitude du courant d'inductance, et que la tension d'échantillonnage du condensateur volant est inférieure à la tension de référence du condensateur volant.

3. Convertisseur de courant continu multiniveau selon la revendication 1, dans lequel le dispositif de commande est spécifiquement configuré pour diminuer la différence de phase entre les porteuses des premiers transistors de commutation dans les deux groupes de transistors de commutation lorsque le dispositif de commande détermine d'ajuster la différence de phase entre les porteuses des premiers transistors de commutation dans les deux groupes de transistors de commutation sur la base de l'amplitude du courant d'inductance, et que la tension d'échantillonnage du condensateur volant est supérieure à la tension de référence du condensateur volant.

4. Procédé de commande de tension pour un condensateur volant, dans lequel le condensateur volant est utilisé dans un convertisseur de courant continu multiniveau, le convertisseur de courant continu multiniveau comprend également deux groupes de transistors de commutation, une inductance et un dispositif de commande, et

chaque premier groupe de transistors de commutation comprend un premier transistor de commutation, $Q_1$, et un second transistor de commutation, $Q_4$, dont les états marche et arrêt sont complémentaires, le premier transistor de commutation est connecté à une extrémité d'une alimentation haute tension du convertisseur de courant continu multiniveau, et le second transistor de commutation est connecté à l'autre extrémité de l'alimentation haute tension du convertisseur de courant continu multiniveau ; et
le second groupe de transistors de commutation comprend un premier transistor de commutation, $Q_2$, et un second transistor de commutation, $Q_3$, dont les états marche et arrêt sont complémentaires ; et
une électrode de drain de $Q_1$ est connectée à une extrémité positive d'une alimentation haute tension ; et
une électrode source de $Q_1$ est connectée à une électrode de drain de $Q_2$ et à une extrémité du condensateur volant ; et
l'autre extrémité du condensateur volant est connectée à une électrode source de $Q_3$ et à une électrode de drain de $Q_4$ ; et l'inductance est connectée à une électrode source de $Q_2$ et à une électrode de drain de $Q_3$ ; et
le procédé de commande de tension comprend :

lorsqu'une valeur absolue d'une différence entre une tension d'échantillonnage et une tension de référence du condensateur volant est supérieure à un premier seuil, indiquer qu'une tension du condensateur volant n'est pas ajustée à une valeur cible, ajuster (S101), par le dispositif de commande sur la base d'une amplitude d'un courant d'inductance, une différence de rapport cyclique entre les premiers transistors de commutation dans les deux groupes de transistors de commutation ou une différence de phase entre les porteuses des premiers transistors de commutation dans les deux groupes de transistors de commutation pour commander la tension du condensateur volant et réduire une contrainte de tension du convertisseur de courant continu multiniveau ; et le procédé comprend également l'ajustement, par le dispositif de commande, de la différence de phase entre les porteuses des premiers transistors de commutation dans les deux groupes de transistors de commutation lorsque le courant d'inductance est inférieur à un deuxième seuil ; ou l'ajustement, par le dispositif de commande, de la différence de rapport cyclique entre les premiers transistors de commutation dans les deux groupes de transistors de commutation lorsque le courant d'inductance est supérieur à un troisième seuil ; ou lorsque le courant d'inductance est supérieur ou égal à un deuxième seuil et inférieur ou égal à un troisième seuil, l'ajustement, par le dispositif de commande selon un procédé d'ajustement à un moment antérieur, de la différence de rapport cyclique entre les premiers transistors de commutation dans les deux groupes de transistors de commutation ou de la différence de phase entre les porteuses des premiers transistors de commutation dans les deux groupes de transistors de commutation.

5. Procédé de commande de tension selon la revendication 4, dans lequel l'ajustement, par le dispositif de commande sur la base d'une amplitude d'un courant d'inductance, d'une différence de rapport cyclique entre les premiers transistors de commutation dans les deux groupes de transistors de commutation ou d'une différence de phase entre les porteuses des premiers transistors de commutation dans les deux groupes de transistors de commutation comprend :

l'augmentation, par le dispositif de commande, de la différence de phase entre les porteuses des premiers transistors de commutation dans les deux groupes de transistors de commutation lorsqu'il est déterminé que la différence de phase entre les porteuses des premiers transistors de commutation dans les deux groupes de transistors de commutation doit être ajustée sur la base de l'amplitude du courant d'inductance, et que la tension d'échantillonnage du condensateur volant est inférieure à la tension de référence du condensateur volant ; ou la diminution, par le dispositif de commande, de la différence de phase entre les porteuses des premiers transistors de commutation dans les deux groupes de transistors de commutation lorsqu'il est déterminé que la différence de phase entre les porteuses des premiers transistors de commutation dans les deux groupes de transistors de commutation doit être ajustée sur la base de l'amplitude du courant d'inductance, et que la tension d'échantillonnage du condensateur volant est supérieure à la tension de référence du condensateur volant.

6. Appareil de commande, dans lequel l'appareil de commande comprend un dispositif de commande selon la revendication 1 et une mémoire, la mémoire est configurée pour stocker des instructions, et le dispositif de commande, lorsqu'il est constitué du convertisseur de courant continu multiniveau selon la revendication 1, est configuré pour invoquer les instructions stockées dans la mémoire, pour réaliser le procédé de commande de tension selon l'une quelconque des revendications 4 et 5.

FIG. 1

FIG. 2

FIG. 3

FIG. 4

FIG. 5

FIG. 6

FIG. 7

FIG. 8

FIG. 9

FIG. 10

——— Fixed duty cycle difference     — — — Fixed phase difference

FIG. 11

FIG. 12

FIG. 13

FIG. 14

When an absolute value of a difference between a sampling voltage and a reference voltage of a flying capacitor is greater than a first threshold, a controller adjusts, based on a magnitude of an inductor current, a duty cycle difference between first switching transistors in two switching transistor groups or a phase difference between carriers of first switching transistors in two switching transistor groups

S101

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARVALHO et al.** *Phase-Shift Control of Flying Capacitor Voltages in Multilevel Converters*

- **STILLWELL et al.** *Active Voltage Balancing in Flying Capacitor Multi-Level Converters With Valley Current Detection and Constant Effective Duty Cycle Control*